# EUROPEAN PATENT APPLICATION

(11) **EP 1 923 811 A2**
(43) Date of publication of application: **21.05.2008**
(21) Application number: 07120530.6
(22) Date of filing: 13.11.2007
(51) Int. Cl.: G06F 21/00

(54) **Method and device for providing the device with access rights to access rights controlled digital content**

(30) Priority: 21.11.2006 EP 06301159
(71) Applicant: Thomson Licensing, 92100 Boulogne-Billancourt (FR)
(72) Inventor: LEBEGUE, Xavier, 78350, Jouy-en-Josas (FR); FLORENT, Teddy, 75002, PARIS (FR)
(74) Representative: Berthier, Karine

(57) **Abstract**

A method for providing access rights to access rights controlled digital content. A file (200) comprising a playable preview (210), instructions (212) on how to procure access rights, and the access rights controlled digital data (216) is transferred (402) to the device (110, 310; 500) that plays (406) the preview (210) and the instructions (212). The user then provides instructions to obtain the access rights to the access rights controlled digital content, which the device requests (412) from a content owner (130, 330) that delivers the access rights to the device. Also provided are a device and digital file. The invention makes it possible to reduce the time needed between the preview and the viewing of the digital content, as no downloading time is needed.

## Description

### FIELD OF THE INVENTION

The invention relates generally to digital content distribution and specifically to distribution/acquisition of access rights to digital content.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Distribution of multimedia content over the Internet, particularly using peer-to-peer (P2P) techniques is a huge phenomenon. In such networks, it is common for a user to offer content such as films and music to other users in the network, usually for free. Such content may for example have been copied from a DVD. It will thus be appreciated that while P2P networks are good tools for exchanging photographs and the like, they also enable unauthorized dissipation of copyrighted material.

Naturally there are many ideas on how to hinder or at least dissuade peers from downloading such material in P2P networks. One such idea is "P2P pollution," which means that content owners, such as a film studio, tries to saturate a P2P network by providing decoy, i.e. files that at first glance appear to be a bona fide film, but turns out to be unplayable once the peer has downloaded the film. As downloading an entire film may take a considerable time, it is hoped that peers tire and cease their efforts. P2P pollution solutions are described in US 2003-0195852, WO 2006/15168, US 2004-0250106, US 2004-250106, WO 2006/041742, and in "Pollution in P2P file sharing systems" by J. Liang, R. Kumar, Y. Xi, and K.W. Ross; Proceedings IEEE Infocom 2005 (IEEE Cat. No. 05CH37645), Pt. vol. 2, pp. 1174-1185 vol. 2; ISBN 0780389689.

However, the solutions hereinbefore do not provide any means for the peers to acquire access rights to the real film, usually in exchange for a certain sum of money.

In parallel technical areas, such as for example mobile telephony, a similar problem exists: how to efficiently provide access to access rights protected digital content. With the rapid developments in mobile communications, mobile phones have already begun to display live television and there are also specific portable video players that are believed to acquire mobile communication capabilities quite soon.

At present, the transmission bandwidth for television on mobile phones is rather limited and it is rather expensive to watch television this way. On the other hand, it is already possible for mobile phone users to pay for a song and download it to the mobile phone. These solutions are less suitable in the case of e.g. feature films; either the quality (in particular the resolution) of the film is low or it takes a very long time to download the film.

The present invention provides a solution that overcomes problems of the prior art.

### SUMMARY OF THE INVENTION

In a first aspect, the invention is directed to a method for providing a device with access rights to access rights protected digital content. A file is transferred to the device, the file comprising playable instructions indicating how to procure access rights to the access rights protected digital content, and the access rights protected digital content. The playable instructions are played, access rights to the access rights protected digital content are requested from a content owner, and the access rights are received.

In a preferred embodiment, the file further comprises a playable preview that is played.

In a preferred embodiment, the transfer of the file is performed by the content owner pushing the file to the device.

In another preferred embodiment, the transfer of the file is performed by the device downloading the file.

In a further preferred embodiment, the request for the access rights is performed by sending to a payment server payment information necessary to authorise purchase of the access rights, an identity of the access rights protected digital content, and an identity of the device; processing by the payment server of the payment information necessary to authorise purchase of the access rights; sending from the payment server to the content server an identity of the access rights protected digital content and an identity of the device; preparing by the content server the access rights; and sending from the content server to the device the access rights.

In a second aspect, the invention is directed to a device for obtaining access rights to access rights protected digital content. The device comprises a communication unit adapted to receive a file comprising playable instructions indicating how to procure access rights to the access rights protected digital content, and the access rights protected digital content. The device further comprises a memory adapted to store the file, a player adapted to play the playable instructions. The device also comprises an application adapted to receive user instructions to obtain the access rights to access rights protected digital content, request from a content owner access rights to the access rights protected digital content, and receiving the access rights.

In a preferred embodiment, the file further comprises a playable preview and the player is further adapted to play the playable preview.

In a preferred embodiment, the device further comprises a notification unit adapted to inform the user when a new file has been received.

In a third aspect, the invention is directed to a digital file comprising access rights protected digital content. The digital file further comprises a part comprising playable instructions indicating how to procure access rights to the access rights protected digital content, and a part comprising a unique location code and an identity of the access rights protected digital content.

In a preferred embodiment, the digital file further comprises a playable preview part.

### BRIEF DESCRIPTION OF THE DRAWINGS

The various features and advantages of the present invention and its preferred embodiments will now be described with reference to the accompanying drawings which are intended to illustrate and not to limit the scope of the present invention and in which:
Figure 1 illustrates an exemplary peer-to-peer network for digital content distribution according to the invention;
Figure 2 illustrates an exemplary data file according to the invention;
Figure 3 illustrates a further environment for digital content distribution according to the invention;
Figure 4 is a flow chart illustrating a preferred embodiment of a method for digital content distribution according to the invention; and
Figure 5 illustrates an exemplary embodiment of a device according to the invention.

### DETAILED DESCRIPTION OF PREFERRED EMBODIMENTS

The general idea of the invention resides in the download of a particular data content file that preferably comprises a preview of the data content, instructions on how to obtain the access rights necessary to access the content, and the content itself in a scrambled, i.e. access rights protected, form.

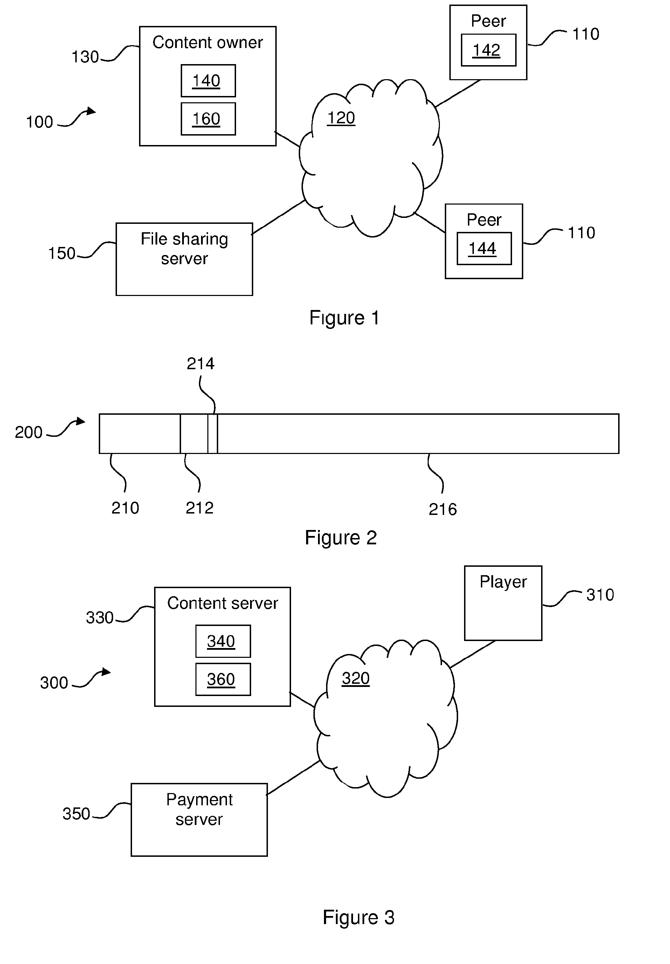

Figure 1 illustrates an exemplary peer-to-peer network 100 that comprises a plurality of peers 110 linked together by a network 120 such as the Internet and an apparatus 130 of a content owner, for example a film studio. The apparatus 130 acts as a peer towards the plurality of peers 110. The peers 110 and the apparatus 130 stores content 140 142 144, such as a film, which is made available to the peers 110 in the network 100 using well-known file sharing technology, for example through a file sharing server 150 that keeps track of which peer stores what content. It should be noted however that certain P2P networks are truly decentralised, in which case there is no file sharing server.

In the present example, a peer 110 that wishes to access content first accesses the file sharing server 150 in order to find out which peer 110 has the desired content and then proceeds to download the content from that peer 110. To counteract this, as mentioned hereinbefore, some content owners use P2P pollution that may cause heavy traffic on the network 100.

Thus, the present invention improves on the P2P pollution technology in that it provides a new type of decoy, illustrated in Figure 2. The new decoy 200 is used on the apparatus 130 that pretends to be a peer providing bona fide content, for example by having a name that evokes the name of a film and a file type, such as "mpg", that suggests that the decoy may be played normally.

However, the new decoy 200 is not, as state of the art decoys, unusable by the downloading peer. Rather, the new decoy 200 is a data file that comprises a first accessible (i.e. playable) part 210, a second accessible part 212, a part 214 usable by an application as will be further described hereinafter, and a protected part 216. The first accessible part 210 may for example be a preview of a film or the first minutes of the film in the protected part 216. The second accessible part 212 comprises instructions on how to unlock the protected part 216 that comprises the entire (or, depending on the case, the rest of) the content; in other words, how to acquire the necessary access rights to the access rights protected digital content 216. It should be noted however, that it is possible to do without the playable preview 210 and simply provide an identity of the protected digital content 216 in the playable instructions 212, e.g. "To obtain the necessary descrambling key(s) to access the film "Harold and Maude", please proceed as follows..."

Naturally, it is advantageous that the name of the new decoy 200 corresponds to its content. It is also advantageous that the size of the new decoy 200 corresponds, at least roughly, to the size that may be expected by a user; the size depending on many factors apart from the length of the film, such as e.g. the compression factor.

After having downloaded the new decoy 200 to a peer 110, a user usually plays it sooner or later. If the user starts from the beginning, the first accessible part 210 is played by the content player, which, if the user does not interrupt the playing, is followed by the second accessible part 212, which provides instructions on how to access the protected part 216.

In a preferred embodiment, the user is instructed to download and launch an application 160 that is not necessarily provided by the apparatus 130 as in the present example. When run, the application 160 handles payment for access to the protected part 216, e.g. by obtaining credit card information from the user and providing this information and an identity of the protected part 216, which is located in the application usable part 214 that also comprises a unique location code, known in the art for e.g. MPEG players. The unique location code enables the application 216 to know where the playable parts 210, 212 end and where the application usable part 214 begins, which in turn enables the application to find the identity of the protected part and also to know where the protected part begins (as this follows the identity). The unique location code may for example be a start code such as "$$BEGINNING OF ENCRYPTED HEADER$$" located as in Figure 2 or a back pointer in located in the last bytes before the END of the file, in which the starting address is (file_size-back_pointer). In the latter case, the application usable part is preferably divided into two parts: the back pointer at the end and the content identity in the place illustrated by 214 in Figure 2.

Figure 3 illustrates a further environment 300 in which the present invention may be used. A player 310, that preferably is mobile, is connected to a network 320, which preferably is at least partially wireless. The player 310 may for example be connected to a mobile telecommunications network such as GSM.

The environment further comprises a content owner 330 that stores content 340 and at least one decryption key 360 necessary to access the content, and a payment server 350.

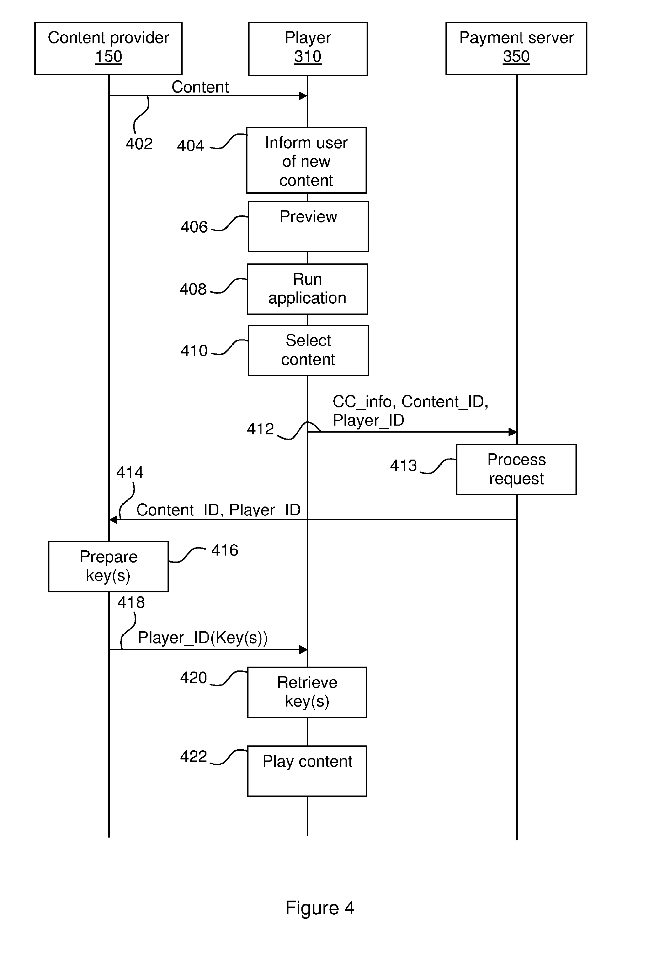

Figure 4 is a flow chart that illustrates a preferred embodiment of a method according to the invention for use in the environment 300 of Figure 3. The method begins when the content owner uses the content server 330 to push 402 content 340 to the player 310, possibly through a network operator (not illustrated) that runs the network that the player is connected to, although it should be noted that the content owner may be the network operator. While the content owner may also send a message to the player 310 to inform the user that new content is available on the player 310, it is preferable that the player 310 itself is adapted to keep track of the content 340 that it receives and inform 404 the user of the available new content 340. The content 340 preferably comprises the elements of the decoy 200 illustrated in Figure 2, i.e. a playable preview 210, playable instructions 212 (including e.g. the price for access to the content), a part 214 usable by an application as further described hereinafter, and the access rights protected content 216.

The user may then instruct the player 310 to display 406 a preview of the content 340 and the instructions for payment of the same. If the player 310 does not implement the necessary functionality to access the application usable part 214 and effectuate payment for the content 340, then it will have to download the application 360, for example from the content server 330, and install and run the application. However, in the present embodiment, it is assumed that the player 310 already stores the required application so that the application may be run 408 without having to download and install it first. The user then selects 410 the content for which he or she decides to pay. The application accesses the application usable part 214 to obtain an identity of the content 340 (Content_ID), and also obtains information necessary for payment, such as for example credit card information (CC_info). These pieces of information and an identity of the player 310 (Player-ID) are then sent 412 to the proper entity using a content payment identity stored in the application usable part 214, in the present example to the payment server 350 that processes 413 the request and, if the payment is authorised, sends 414 to the content server 330 an access authorisation message comprising the content identity (Content_ID) and the player identity (Player_ID).

Upon reception of the access authorisation message, the content owner 330 retrieves and encrypts 416 the at least one key (Key(s)) necessary to access the protected content 216. The at least one key (Key(s)) is preferably encrypted as is well known in the prior art, e.g. by encryption with a public key of the player or with a key that is based on the identity of the player (Player_ID). The content owner 330 sends 418 the encrypted at least one key (Key(s)) and the identity of the content (Content_ID) to the player 310 that retrieves 420 the at least one key 360 so that it may be used to play 422 the protected content 216. The application may further treat the content 402 so as remove the preview 210, the payment instructions 212, and the application usable part, so as to obtain a "clean" file, i.e. a file in which the protected content 216 is directly playable with the use of the at least one key.

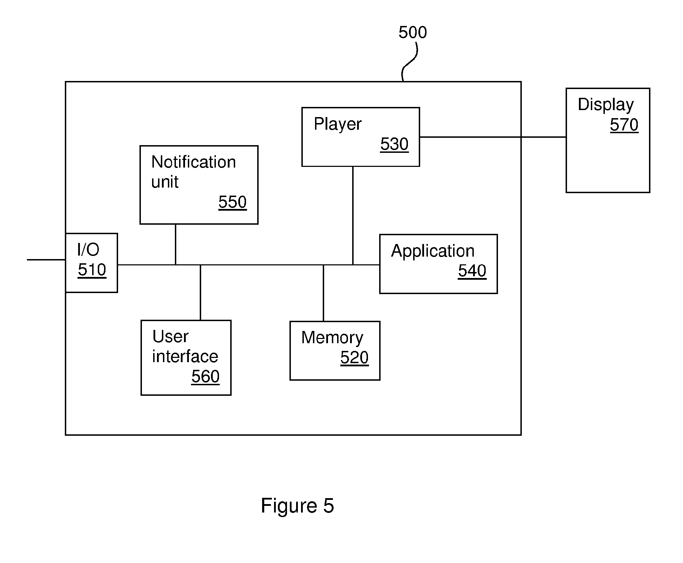

Figure 5 illustrates an exemplary embodiment of a device 500 according to the invention. The device 500 comprises a communication unit (I/O) 510 adapted to communicate with other devices, such as for example a content owner, and to receive a file 200 comprising digital content as described hereinbefore. The device 500 further comprises a memory 520 adapted to store the file 200, a player 530 for playing digital content, such as the preview part 210 of the file 200, the digital content being made accessible to the user through a rendering device 570 such as a display that may be integral to the device 500 or external. The device 500 also comprises an application 540 adapted to receive user input via a user interface 560, to request (step 412) access rights, and to retrieve received keys and furnish these to the player 530. In addition, the device 500 also comprises a notification unit 550 adapted to notify the user that new digital content has been received and is ready to be played.

The above specification, examples and drawings provide a complete description of the manufacture and use of the composition of the invention. Since many embodiments of the invention can be made without departing from the spirit and scope of the invention, the invention resides in the claims herein after appended.

## Claims

1. A method for providing to a device (110, 310) access rights to access rights protected digital content (140, 340), the method comprising the steps of:
transferring (402) a file (200) comprising the access rights protected digital content (140, 340) to the device (110, 310);
**characterised in that** the file (200) further comprises playable instructions (212) indicating how to procure access rights to the access rights protected digital content (140, 340), and the access rights protected digital content (216; 140, 340);
and **in that** the method further comprises the steps of:
playing (406) the playable instructions (212);
requesting (412, 414) from a content owner (130, 330) access rights to the access rights protected digital content (140, 340); and
receiving (418) the access rights.

2. The method of claim 1, wherein the file (200) further comprises a playable preview (210) and wherein the playing step (406) further comprises playing the playable preview (210).

3. The method of claim 1, wherein the transferring step (402) is performed by the content owner (130, 330) pushing the file (200) to the device (110, 310).

4. The method of claim 1, wherein the transferring step (402) is performed by the device (110, 310) downloading the file (200).

5. The method of claim 1, wherein the requesting step (412, 414) comprises the steps of:
sending (412) to a payment server (350) payment information necessary to authorise purchase of the access rights, an identity of the access rights protected digital content, and an identity of the device;
processing (413) by the payment server of the payment information necessary to authorise purchase of the access rights;
sending (414) from the payment server (350) to the content server (330) an identity of the access rights protected digital content and an identity of the device;
preparing (416) by the content server (330) the access rights; and
sending from the content server (330) to the device (110, 310) the access rights.

6. A device (500) for obtaining access rights to access rights protected digital content (140, 340), the device comprising:
a communication unit (510) adapted to receive a file (200) comprising playable instructions (212) indicating how to procure access rights to the access rights protected digital content (140, 340), and the access rights protected digital content (216; 140, 340);
a memory (520) adapted to store the file (200);
a player (530) adapted to play the playable instructions (212);
an application adapted to:
receive user instructions to obtain the access rights to access rights protected digital content (140, 340);
request from a content owner (130, 330) access rights to the access rights protected digital content (140, 340); and
receive the access rights.

7. The device of claim 6, further comprising a notification unit (550) adapted to inform the user when a new file (200) has been received.

8. The device of claim 6, wherein the player (530) is further adapted to play a playable preview (210) comprised in the file (200).

9. A digital file (200) comprising access rights protected digital content (216), **characterised in that** the digital file further comprises:
a part (212) comprising playable instructions (212) indicating how to procure access rights to the access rights protected digital content (216); and
a unique location code and
an identity of the access rights protected digital content (216).

10. The digital file (200) of claim 9, **characterised in that** the file (200) further comprises a playable preview (210) part.
